**Europäisches Patentamt**

**European Patent Office**

**Office européen des brevets**

(19)

(11) Numéro de publication : **0 286 528 B1**

(12) **FASCICULE DE BREVET EUROPEEN**

(45) Date de publication du fascicule du brevet :
26.06.91 Bulletin 91/26

(51) Int. Cl.$^5$ : **G01D 5/26, G01B 9/02, G02B 6/12**

(21) Numéro de dépôt : **88400814.5**

(22) Date de dépôt : **05.04.88**

(54) **Capteur de déplacement en optique intégrée.**

(30) Priorité : **07.04.87 FR 8704877**

(43) Date de publication de la demande :
**12.10.88 Bulletin 88/41**

(45) Mention de la délivrance du brevet :
**26.06.91 Bulletin 91/26**

(84) Etats contractants désignés :
**CH DE GB IT LI NL**

(56) Documents cités :
**EP-A- 0 198 735**
**US-A- 4 324 492**
**TECHNISCHES MESSEN TM, vol. 52, no. 9, 1985, pages 321-326, Munich, DE; H.-J. BOEHNEL et al.: "Miniaturisiertes Halbleiterlaser-Interferometer für die industrielle Wegmessung"**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Gidon, Pierre**
**9, Avenue du Grésivaudan**
**F-38130 Echirolles (FR)**
Inventeur : **Lizet, Jacques**
**35, Avenue Rhin et Danube**
**F-38000 Grenoble (FR)**
Inventeur : **Valette, Serge**
**41, rue des Eaux-Claires**
**F-38100 Grenoble (FR)**

(74) Mandataire : **Mongrédien, André et al c/o BREVATOME 25, rue de Ponthieu F-75008 Paris (FR)**

**Description**

La présente invention a pour objet un capteur de déplacement servant à mesurer le déplacement d'un objet ainsi qu'à déterminer le sens de déplacement de cet objet. Ce capteur est destiné à fonctionner dans des structures d'optique intégrée.

L'invention trouve une application dans tous les domaines où l'on désire connaître la distance parcourue par un mobile ainsi que le sens de déplacement de ce mobile, et en particulier dans les domaines spatiaux, avioniques, navals, en robotique ou sur les chaînes de montage d'un grand nombre d'objets (automobiles, appareils électro-ménagers, conditionnement d'aliments,...) et de manière générale en métrologie dimensionnelle.

Les techniques de traitement et/ou de transmission à distance de l'information, étudiées depuis quelques années, utilisent la transmission par ondes lumineuses dans des guides de lumière à structure plane. Ces guides de lumière sont constitués d'une couche guidante, intercalée entre deux milieux présentant des indices de réfraction inférieurs à celui de la couche guidante. L'air constitue généralement l'un des deux milieux.

A chaque guide optique, on associe un indice effectif $n_e = c/v$, où v représente la vitesse de phase de la lumière dans la couche guidante et c la vitesse de la lumière dans le vide. La valeur de l'indice effectif dépend de la valeur des différents indices des couches constituant ce guide ainsi que de leur épaisseur. Il en résulte, en optique intégrée, que la vitesse d'une onde lumineuse peut être modifiée soit par des variations d'indice des différentes couches en présence, soit par variation de leur épaisseur.

Par transposition des phénomènes connus en optique classique, on a cherché à réaliser sous forme de composants intégrés des structures équivalentes aux structures classiques pour permettre la propagation de la lumière. Ces structures intégrées présentent l'avantage d'un encombrement limité, ce qui permet leur utilisation dans des lieux ou domaines actuellement non exploités.

Le capteur de déplacement auquel se rapporte l'invention est un interféromètre du type Michelson basé sur l'analyse du système d'interférence entre un faisceau de référence et un faisceau de mesure, ce dernier étant réfléchi par un miroir solidaire du mobile à étudier.

Le déplacement d'un mobile est généralement déterminé en comptant les franges d'interférence, la distance parcourue par le mobile étant, pour une longueur d'onde donnée, directement proportionnelle au nombre de franges du système d'interférence.

Les interféromètres du type Michelson connus, en optique classique, utilisent un seul faisceau de référence et un seul faisceau de mesure. Dans la majorité des cas, cette disposition est suffisante pour mesurer la distance parcourue par un mobile et pour déterminer le sens de déplacement de ce mobile. Toutefois, les inventeurs ont trouvé que dans certaines conditions opératoires, il est possible de faire une erreur sur le sens de déplacement du mobile. Ceci est en particulier le cas lorsque le mobile s'arrête puis repart dans le sens contraire du premier déplacement et que le changement de sens a lieu lorsque la détection se fait sur un maximum ou un minimum de franges d'interférence.

L'invention a justement pour objet un capteur de déplacement permettant de mesurer la distance parcourue par un mobile et de déterminer à coup sûr le sens de ce déplacement et ce, quelles que soient les conditions d'analyse du système d'interférence. En outre, ce capteur de déplacement est réalisé sous forme intégrée.

De façon plus précise, l'invention se rapporte à un capteur du type interféromètre de Michelson en optique intégrée servant à mesurer la distance parcourue par un mobile et à déterminer le sens de déplacement de ce mobile, comportant :

– une source de lumière émettant un faisceau principal de lumière monochromatique,

– des moyens de collimation du faisceau principal,

– des premiers moyens séparateurs du faisceau principal collimaté pour former un faisceau de mesure et un faisceau de référence,

– un premier miroir solidaire du mobile pour renvoyer le faisceau de mesure sur les premiers moyens séparateurs,

– des moyens déphaseurs pour introduire un déphasage constant, différent de $\pi$, sur une partie du faisceau de référence afin de former un premier et un second faisceaux de référence déphasés,

– un second miroir pour renvoyer les premier et second faisceaux de référence sur les premiers moyens séparateurs afin de faire interférer respectivement les premier et second faisceaux de référence avec le faisceau de mesure et former ainsi des premier et second signaux lumineux d'interférence, ces signaux d'interférence étant représentatifs du déplacement du mobile et du sens de déplacement de ce mobile,

– des seconds moyens séparateurs pour séparer les premier et second signaux d'interférence,

– des premier et second détecteurs pour détecter respectivement les premier et second signaux d'interférence,

ce capteur, partiellement intégré sur un substrat monocristallin, comportant aussi un guide de lumière d'indice effectif $n_e$ formé sur le substrat, dans lequel se propagent les différents faisceaux lumineux. Dans ce cas les moyens de collimation, les premiers moyens séparateurs et les moyens déphaseurs sont formés respectivement par une modification locale appropriée de l'indice effectif du guide de lumière. En outre, le premier miroir et les seconds moyens séparateurs sont formés respectivement par un flanc gravé du guide de lumière, s'étendant sur toute la hauteur du guide jusqu'au substrat.

Dans le cas d'un mobile comportant au moins une partie réfléchissante, cette partie peut constituer le premier miroir.

L'utilisation selon l'invention de deux systèmes d'interférence permet de lever l'ambigüité possible sur le sens de déplacement du mobile, lorsque ce sens est déterminé sur un maximum ou un minimum de l'un des deux signaux d'interférence. En effet, l'analyse sur un maximum ou un minimum du signal d'interférence ne peut exister à la fois sur les deux systèmes d'interférence puisque ceux-ci sont déphasés d'une valeur différente de $\pi$.

Le déphasage introduit entre les premier et second faisceaux de référence est en particulier égal à $\pi/2$.

Les modifications locales de l'indice effectif du guide optique peuvent être réalisées en implantant localement des ions dans l'une des couches du guide, en modifiant localement l'épaisseur de l'une des couches, en gravant localement la couche superficielle du guide et/ou changeant localement la nature de l'une des couches du guide.

Les modifications locales de l'indice effectif du guide peuvent consister en une augmentation ou en une diminution locale de l'indice effectif du guide.

De façon avantageuse, le guide de lumière du capteur selon l'invention comprend successivement en partant du substrat, une couche continue d'un premier matériau, une couche continue d'un second matériau et une couche d'un troisième matériau comportant des motifs gravés constituant les modifications locales de l'indice effectif du guide de lumière, le second matériau ayant un indice de réfraction supérieur à celui des premier et troisième matériaux.

Le capteur selon l'invention peut avantageusement être réalisé en technologie silicium ou en technologie III-V, (GaAs ou InP), technologies bien maîtrisées en électronique intégrée.

De préférence, les premier et troisième matériaux sont de la silice pure, le second matériau est du nitrure de silicium et le substrat est du silicium.

L'utilisation de la silice pure comme couche superficielle du guide optique (troisième matériau) est particulièrement intéressante compte tenu de sa bonne qualité optique et de ses possibilités de gravure anisotrope d'excellente qualité. La silice pure présente un indice de réfraction voisin de 1,45.

De même, l'utilisation du nitrure de silicium comme second matériau est particulièrement intéressante du fait de son indice de réfraction élevé (voisin de 2).

Toutefois, d'autres matériaux peuvent être utilisés pour constituer les différentes couches du guide optique telles que l'alumine avec un indice de réfraction de 1,65, différents types de verre dont les indices de réfraction varient de 1,5 à 1,8, de la silice dopée au phosphore ayant des indices de réfraction allant jusqu'à 1,49, ou dopée au titane.

Dans le cas de motifs gravés dans la couche superficielle du guide optique, les variations locales de l'indice effectif de ce guide sont notamment dues à la présence de l'air comme matériau supérieur du guide de lumière, l'air présentant l'indice de réfraction le plus bas des diélectriques.

Il est aussi possible de modifier localement l'indice effectif du guide de lumière en remplissant d'un quatrième matériau les motifs gravés de la couche superficielle du guide, ce quatrième matériau ayant un indice de réfraction inférieur à celui du troisième matériau et inférieur à celui du second matériau.

Ce quatrième matériau peut être déposé par pulvérisation ou par décomposition chimique en phase vapeur.

Dans le cas d'une couche superficielle en silice et d'une couche guidante en nitrure de silicium, on peut utiliser comme quatrième matériau du fluorure de magnésium ($MgF_2$), ce matériau présentant un indice de réfraction de 1,38 (inférieur à ceux de $SiO_2$ et de $Si_3N_4$).

Les moyens de collimation du faisceau principal peuvent être constitués par une lentille dont la forme dépend de la distance focale à obtenir et du type d'aberrations à minimiser. Cette lentille peut être obtenue par gravure ionique réactive de la couche superficielle du guide optique et comporter deux dioptres en forme d'ellipse ou d'hyperbole, ce qui correspond respectivement à une augmentation et à une diminution de l'indice effectif du guide optique.

Cette lentille peut aussi être une lentille de Fresnel intégrée telle que celle décrite dans les brevets US-A-4 445 759 et EP-A-0 050 545.

Il est aussi possible de réaliser les moyens de collimation sous forme d'un miroir parabolique tel que celui décrit dans le document EP-A-0 196 948.

Les premiers moyens séparateurs peuvent être formés par un miroir séparateur ou une lame séparatrice. Cette dernière peut simplement être constituée par un sillon gravé dans la couche superficielle du guide optique ou avantageusement être réalisée par un réseau de diffraction.

Le premier miroir et les seconds moyens séparateurs sont obtenus en gravant le guide optique sur toute sa hauteur, par une gravure du type ionique réactive. Afin d'améliorer leurs caractéristiques de réflexion, les flancs gravés correspondants peuvent être recouverts d'une couche métallique.

Les détecteurs peuvent être constitués par un photomultiplicateur ou bien des photodiodes accolés au substrat monocristallin, en sortie du capteur. Il est aussi possible de réaliser ces détecteurs sous forme de photodétecteur intégré sur le substrat monocristallin, tel que celui décrit dans le document EP-A-0 198 735.

En optique intégrée, le faisceau de mesure sortant du guide optique est, du fait des dimensions de ce dernier, et donc de la largeur du mode guidé, fortement diffracté. Or, cette diffraction limite la dynamique de la mesure.

Pour diminuer les effets de cette diffraction, il est avantageux de prévoir un élément optique situé entre les premiers moyens séparateurs et le second miroir, permettant d'augmenter la largeur du mode guidé. Cet élément optique est formé par exemple par une diminution de l'épaisseur de la couche guidante du guide optique (second matériau), ou bien d'une lentille cylindrique située en regard et à distance de la couche guidante du guide, constituée par exemple par une fibre optique dont le diamètre est supérieur à l'épaisseur de la couche guidante.

En vue d'assurer un bon couplage entre la source de lumière monochromatique et les moyens de collimation du faisceau issu de la source, on utilise avantageusement un microguide d'entrée, formé sur le substrat monocristallin et intercalé entre la source et ces moyens de collimation.

D'autres caractéristiques et avantages de l'invention ressortiront mieux de la description qui va suivre, donnée à titre illustratif et non limitatif, en référence aux figures annexées, dans lesquelles :
- la figure 1 représente schématiquement, en perspective, un capteur de déplacement conforme à l'invention,
- la figure 2 illustre, en coupe transversale, une variante de réalisation du microguide d'entrée du capteur de déplacement selon l'invention,
- la figure 3 illustre, en coupe transversale, une autre variante de réalisation du microguide d'entrée du capteur conforme à l'invention,
- la figure 4 illustre, en perspective, une variante de réalisation de la lentille de collimation du capteur selon l'invention,
- la figure 5 représente schématiquement, en perspective, un mode de réalisation de la lame séparatrice du capteur de déplacement selon l'invention, et
- les figures 6a et 6b montrent deux modes de réalisation des miroirs intégrés du capteur de déplacement selon l'invention.

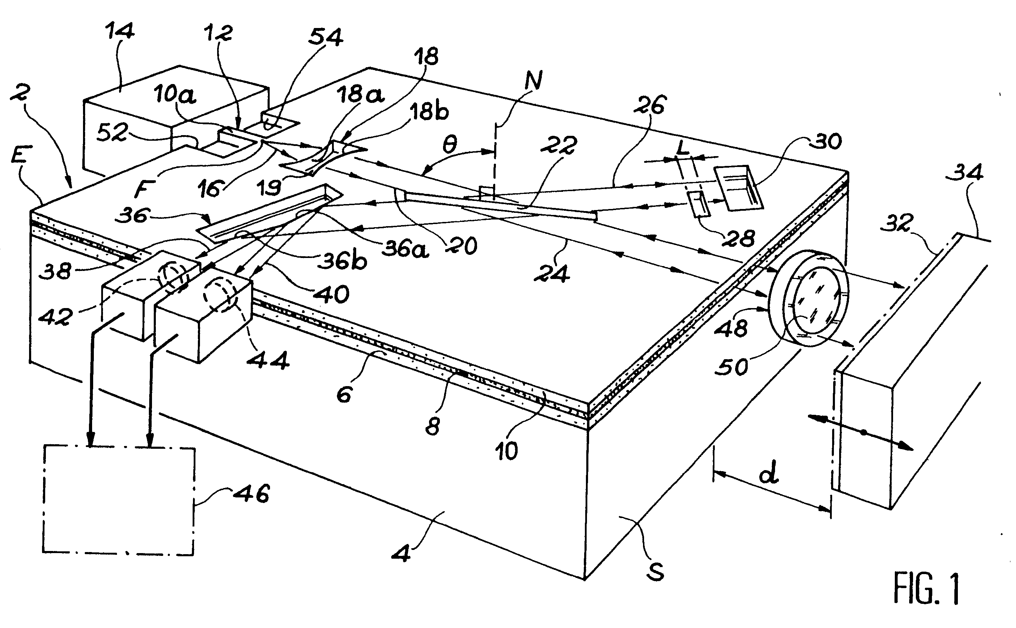

Le capteur selon l'invention comprend, comme représenté sur la figure 1, un guide de lumière 2 réalisé sur un substrat semi-conducteur monocristallin 4 en silicium. Le substrat est obtenu par clivage d'un bloc semi-conducteur afin de présenter des faces d'entrée E et de sortie S rigoureusement parallèles.

Le guide de lumière 2 est constitué de trois couches superposées respectivement 6, 8, 10 en partant du substrat, la couche 8 constituant la couche guidante du guide optique. Cette couche 8 présente un indice de réfraction supérieur à celui des couches 6 et 10. En particulier, la couche inférieure 6 est réalisée en silice pure, la couche guidante 8 en nitrure de silicium et la couche supérieure 10 en silice pure.

L'épaisseur de la couche guidante 8 est comprise entre 10 et 250 nm environ pour que le guide de lumière soit monomode. Les épaisseurs de silice des couches 6 et 10 dépendent de celles de la couche de nitrure : elles sont comprises entre 1 et 5 µm pour assurer un bon isolement de la lumière respectivement du substrat absorbant 4, pour la couche 6 et du milieu extérieur, pour la couche supérieure 10.

La couche de silice 6 peut être obtenue par oxydation thermique du substrat ou bien par un dépôt chimique en phase vapeur (CVD) assisté ou non plasma. Il est aussi possible d'associer ces deux techniques du fait qu'un dépôt CVD d'une couche de silice sur une couche de silice formée thermiquement possède en général une meilleure qualité optique que ce même dépôt CVD effectué directement sur le substrat 4.

La couche de nitrure 8 peut être obtenue par décomposition chimique en phase vapeur basse pression ou assistée plasma (LPCVD) ou (PECVD).

La couche supérieure 6 du guide 10 est réalisée par décomposition chimique en phase vapeur assistée plasma.

Pour une longueur d'onde d'environ 800 nm, la silice pure présente un indice de réfraction de l'ordre de 1,45 et le nitrure de silicium un indice de réfraction de l'ordre de 2.

Dans ce guide de lumière 2, est intégrée la majeure partie des composants optiques du capteur de déplacement selon l'invention.

Le capteur de déplacement comporte à son entrée E un microguide d'entrée 12 assurant un bon couplage entre une source de lumière monochromatique 14, formée d'une diode laser, et le guide optique 2.

Le faisceau lumineux 16 véhiculé par le microguide d'entrée 12 du capteur arrive sur une lentille de collimation 18.

Cette lentille de collimation 18 permet de transformer la lumière sortant du microguide 12, assimilée à un point lumineux, en un faisceau de lumière parallèle 20 ; pour ce faire, l'extrémité du microguide 12 en regard de la lentille de collimation 18 doit être située au foyer F de cette lentille.

Le faisceau de lumière collimaté 20 attaque alors une lame séparatrice 22 qui peut être constituée par un simple sillon gravé dans la couche supérieure 10 du guide optique.

Cette lame séparatrice 22 permet la formation d'un faisceau de mesure 24 et d'un faisceau de référence 26 obtenus respectivement par réflexion du faisceau incident 20 sur la lame 22 et transmission de ce même faisceau par la lame.

Le capteur de déplacement comprend en outre un déphaseur 28, placé sur le faisceau de référence 26, n'affectant qu'une partie de ce faisceau de référence 26 afin de former deux faisceaux de référence déphasés d'un déphasage constant. Le déphasage introduit, différent de $\pi$, est par exemple égal à $\pi/2$.

Le capteur comprend en outre un miroir plan 30 permettant de renvoyer les deux faisceaux de référence sur la lame séparatrice 22 ainsi qu'un miroir plan 32 situé, hors du substrat 4 et solidaire du mobile 34 dont on veut mesurer le déplacement d ainsi que déterminer le sens de déplacement de ce mobile. Le miroir 32 permet de renvoyer le faisceau de mesure 24 dans le guide d'onde et donc sur la lame séparatrice 22 afin qu'il interfère avec les deux faisceaux de référence et forme ainsi deux signaux lumineux d'interférence, représentatifs du déplacement du mobile 34 et du sens de déplacement de celui-ci.

Les deux systèmes d'interférence formés sur la lame séparatrice 22 sont reçus par un miroir séparateur 36, comportant une face d'entrée formée de deux parties 36a et 36b formant entre elles un angle compris entre 120 et 180°, donnant naissance à deux signaux distincts d'interférence 38 et 40 détectés respectivement par deux photodétecteurs 42 et 44 accolés au substrat 4.

Si $a_r$ représente l'amplitude des deux signaux de référence, $a_s$ l'amplitude du signal de mesure, les deux détecteurs 42 et 44 reçoivent un signal lumineux présentant un fond continu d'amplitude $a_r^2 + a_s^2$ ainsi qu'une modulation de ce fond continu constituant les signaux d'interférence. Les deux systèmes d'interférence étant déphasés de $\pi/2$, la période des franges d'interférence dans les deux systèmes d'interférence correspond à une variation de phase de $2\pi$ c'est-à-dire que le déphasage supplémentaire des signaux d'interférence est dû au déplacement du mobile $(2\pi/\lambda_0).2d = 2\pi$, où d est la distance parcourue par le mobile et $\lambda_0$ la longueur d'onde du faisceau incident 20 monochromatique ; le facteur 2 devant d est dû au chemin aller et retour parcouru par le faisceau de mesure entre la face S du substrat et le miroir 32. Ceci correspond à un déplacement $d = \lambda_0/2$.

Entre un maximum et un minimum du signal de modulation, il y a donc un déphasage de $\pi$ et un déplacement de $\lambda/4$.

En comptant les franges d'interférence des deux systèmes, on a donc la valeur du déplacement. Si N franges ont été comptées, le déplacement d est égal à N $\lambda_0/2$.

A l'aide d'un dispositif de traitement électronique 46, approprié, connecté aux deux photodétecteurs 42 et 44, il est possible d'apprécier une fraction de frange d'interférence. En outre, il est possible d'utiliser un déphasage différent de $\pi/2$ entre les deux faisceaux de référence.

Le sens de déplacement de l'objet est donné par la pente du signal de modulation. Lorsque le mobile se déplace, s'arrête puis repart dans le même sens, la pente du signal de modulation reste de même signe. A l'inverse, si le mobile change de sens, la pente du signal de modulation change de signe et on observe un point de rebroussement qui peut être mis en évidence même si la pente du signal est nulle sur un détecteur, c'est-à-dire même si le changement de sens du mobile a lieu au moment d'un maximum ou d'un minimum d'interférence sur l'un des systèmes d'interférence, car elle sera alors non nulle pour l'autre détecteur.

Le système de traitement 46 servant à l'appréciation d'une fraction de franges, à l'utilisation d'un déphasage différent de $\pi/2$ et/ou à la détection du sens de déplacement du mobile par une combinaison habile des deux signaux d'interférence, est bien connu de l'homme de l'art et a fait l'objet de publications. A cet effet, on peut citer l'article "Liquid level interferometer" de S.F.JACOBS et J.G. SMALL, Applied Optics, vol. 20, n° 20, pp. 3508-3513 du 15 octobre 1981.

Compte tenu de la faible épaisseur de la couche guidante 8, le faisceau de mesure 24 sortant de cette couche est en général fortement diffracté. Afin de limiter au maximum cette diffraction, on interpose une fibre optique 48 entre la lame séparatrice 22 et le miroir 32, en dehors du guide optique, ou un système de collimation plus performant.

Conformément à l'invention, le microguide d'entrée 12, la lentille de collimation 18, la lame séparatrice 22 et le déphaseur 28 intégrés sur le même substrat 4 sont réalisés de façon à modifier localement la valeur de l'indice effectif du guide optique 2.

Le microguide d'entrée 12 peut être formé en pratiquant deux ouvertures 52 et 54 dans la couche superficielle 10 du guide optique, la silice 10a restant entre les deux ouvertures 52 et 54 constituant alors le microguide d'entrée. Les ouvertures 52 et 54 peuvent être réalisées par une gravure ionique réactive en utilisant un plasma de tétrafluorure de carbone ou de trifluorométhane comme agent d'attaque. Cette gravure anisotrope est effectuée sur toute l'épaisseur de la couche de silice 10.

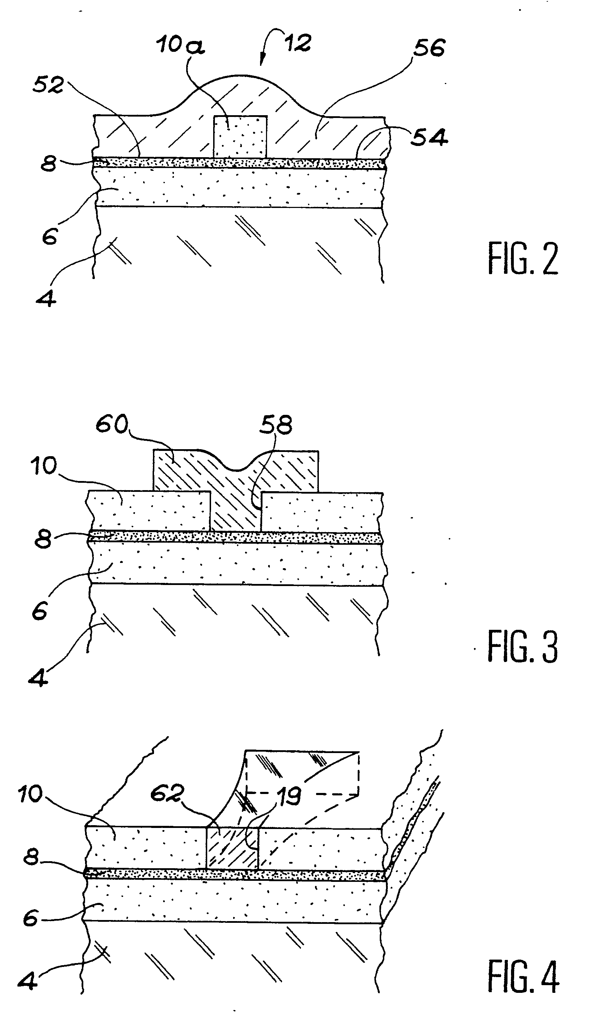

Il est aussi possible de réaliser le guide optique comme représenté sur la figure 2 en déposant au-dessus du plot en silice 10a et des ouvertures 52 et 54 un diélectrique 56 présentant un indice de réfraction inférieur à celui de la silice pure tel que du $MgF_2$.

Il est aussi possible de réaliser le microguide d'entrée comme représenté sur la figure 3. Dans ce cas, on effectue une gravure ionique réactive de la couche superficielle 10 du guide optique, sur toute l'épaisseur de la couche 10, afin de former une ouverture 58 que l'on vient remplir d'un diélectrique 60 présentant un indice de réfraction supérieur à celui de la silice constituant la couche 10, par exemple l'alumine. Dans ce cas, les dimensions du microguide sont définies par les dimensions de l'ouverture 58, alors que dans les modes de réalisation représentés sur les figures 1 et 2, les dimensions du microguide sont déterminées par le plot restant de silice 10a.

La lentille de collimation 18 peut être réalisée, comme représenté sur la figure 1, par une simple gravure anisotrope de la couche superficielle 10, les dimensions et la forme de l'ouverture 19 pratiquée dans la couche de silice 10, définissant les dimensions et les propriétés optiques de la lentille.

Afin d'obtenir de bonnes caractéristiques de collimation de la lentille 18, il est nécessaire de parfaitement contrôler la profondeur de gravure de la couche de silice 10 ainsi que la forme des dioptres 18a et 18b constituant cette lentille.

Pour cela, on utilise une gravure ionique réactive utilisant comme agent d'attaque un plasma de trifluorométhane, réalisée sur une épaisseur de quelques nanomètres puis on termine la gravure par une attaque chimique dans un mélange de $HF-FNH_4$, solution qui n'attaque pas le nitrure de silicium constituant la couche guidante 8 et qui permet d'obtenir un très bon contrôle de la modification locale de l'indice effectif du guide 2. Cette gravure est réalisée de façon classique, à travers un masque de gravure définissant la forme et les dimensions exactes de la lentille 18 à réaliser.

Eventuellement, comme représenté sur la figure 4, l'ouverture 19 pratiquée dans la couche 10 et définissant les dimensions de la lentille 18, peut être remplie d'un diélectrique 62 ayant un indice de réfraction inférieur à celui de la silice tel que $MgF_2$. Toutefois, il est préférable d'utiliser une simple gravure de la silice pour constituer la lentille 18 afin d'obtenir une différence d'indice effectif du guide plus significative (compte tenu des différences d'indice entre l'air et la silice) et donc de former des dioptres 18a et 18b à rayon de courbure faible, ce qui correspond à une lentille de grande ouverture.

La lame séparatrice 22 (figure 1) est aussi réalisée en gravant, par une gravure ionique réactive, la couche de silice 10, avec du $CHF_3$.

Pour que l'intensité du faisceau de mesure 24 et celle du faisceau de référence 26 soient identiques, ce qui correspond à un coefficient de réflexion et de transmission de la lame 22 voisin de 50%, il est nécessaire que l'angle θ que forme le faisceau incident 20 par rapport à la normale N à la lame séparatrice 22 soit proche de l'angle de réflexion total $θ_l$ donné par la relation : $θ_l = Arsin(n_{e2}/n_{e1})$, où $n_{e1}$ représente l'indice effectif du guide $SiO_2/Si_3N_4/SiO_2$ et $n_{e2}$ représente l'indice effectif du guide air/$Si_3N_4$/$SiO_2$. Cette approche n'est valable que si $n_{e1}-n_{e2}$ est supérieur à zéro.

La largeur de la lame séparatrice 22 est calculée en utilisant un calcul d'optique classique où les indices effectifs remplacent les indices réels. L'expérience montre que cette approche donne de bons résultats. e peut être par exemple de l'ordre de 2,5 μm

pour un angle de $θ_l$ voisin de 78°.

Toutefois, avec une différence d'indice $n_{e1}-n_{e2}$ voisine de $4.10^{-2}$, on obtient un angle θ voisin de 78°, ce qui est relativement élevé et peut être un inconvénient quant à l'encombrement du capteur.

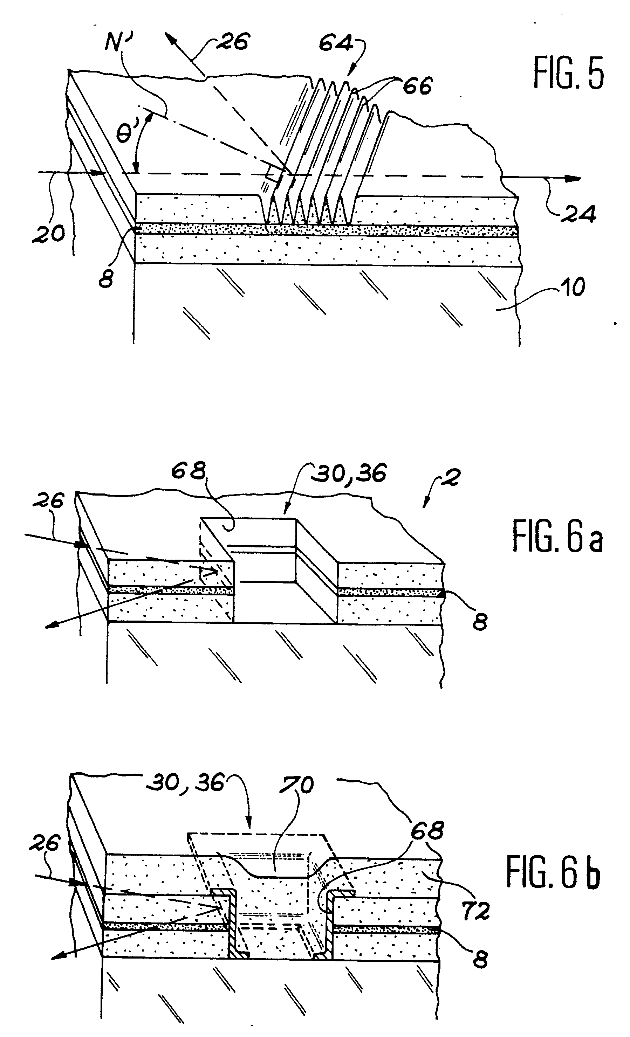

Il est aussi possible de réaliser la lame séparatrice sous forme d'un réseau de diffraction 64, comme représenté sur la figure 5 fonctionnant en régime de Bragg.

Les coefficients de transmission et de réflexion du réseau 64 sont calculés en limitant le nombre de traits 66 de ce réseau ; un coefficient de transmission et de réflexion égal à 50% est obtenu à l'aide d'un réseau comportant 10 à 20 traits.

Ce réseau peut être réalisé en gravant localement, à travers un masque de gravure approprié obtenu selon les procédés classiques de photolithographie, la couche de silice 10 du guide optique. Cette gravure est réalisée de façon anisotrope par un procédé de gravure ionique réactive.

L'utilisation d'un réseau de diffraction permet d'obtenir des angles θ' du faisceau incident 20 par rapport à la normale N' aux traits du réseau, plus éloignés de π/2 que dans le cas d'une lame séparatrice formée d'un unique sillon (figure 1). En outre, le réseau est moins sensible aux éventuelles surgravures ou sous-gravures de la couche de silice 10. En revanche, il est beaucoup plus sensible à la longueur d'onde $λ_0$ du faisceau incident 20 que ne l'est l'utilisation d'un unique sillon.

Il est aussi possible de faire travailler le réseau de diffraction 64 à un ordre supérieur à 1 et par exemple à l'ordre 3 ou 5. Ceci permet d'augmenter de 3 ou 5 fois le pas du réseau pour un même angle θ' et donc de faciliter sa réalisation : pour un réseau travaillant à l'ordre 1, on a un pas de 600 nm environ et pour un réseau travaillant à l'ordre 3, on a un pas de 1800 nm. Dans ce cas, l'angle θ' peut être inférieur à 78°, conduisant à un encombrement plus faible que le sillon unique (figure 1). Toutefois, il doit être nécessairement supérieur à un angle limite θ" pour ne pas avoir de perte d'énergie par diffraction par les ordres inférieurs du réseau. Dans la structure $SiO_2/Si_3N_4/SiO_2$, avec une épaisseur de nitrure de silicium de 0,165 μm, θ" est de l'ordre de 55° à $λ_0$ = 632,8 nm. On peut donc aisément travailler à θ' = 60°.

Le déphaseur 28 est aussi réalisé, comme représenté sur la figure 1, par un simple sillon gravé dans la couche superficielle 10 du guide optique et sur toute son épaisseur. La largeur L de ce déphaseur est calculée de façon que $(2π/λ_0)L(n_{e1}-n_{e2}) = π/4$ puisque le rayon lumineux de référence traverse deux fois ce déphaseur 28. L est typiquement de l'ordre de quelques micromètres pour un déphaseur formé par une simple gravure de la couche 10.

Les miroirs 30 et 36 peuvent être réalisés, comme représenté sur les figures 6a et 6b, par une gravure complète du guide optique 2, jusqu'au substrat. Cette gravure est réalisée de préférence par une gravure ionique réactive utilisant comme agent d'attaque du $CF_4$, du $CHF_3$, $C_2F_4$ ou $SF_6$ pour des couches de silice et de nitrure de silicium, afin d'obtenir des flancs gravés 68 parfaitement anisotropes.

Afin d'améliorer leurs caractéristiques de réflexion, il est possible de recouvrir les flancs gravés 68 d'une couche d'or ou d'aluminium 70, comme représenté sur la figure 6b.

Dans ce cas particulier, une couche 72 peut alors être déposée sur l'ensemble du guide améliorant en particulier les propriétés du microguide 12 et assurant une protection mécanique des miroirs. Cette couche 72 peut être de la silice pure déposée par CVD, un polyimide ou un gel de silice connu sous le nom de "Spin on glass".

La description donnée précédemment n'a bien entendu été donnée qu'à titre illustratif, toute modification, sans pour autant sortir du cadre de l'invention, pouvant être envisagée. En particulier, il est possible de changer la nature des couches du guide optique, la façon de modifier localement l'indice effectif de ce guide ainsi que de changer la réalisation des différents composants du capteur.

Par exemple, il est possible d'utiliser comme couche supérieure du guide optique un diélectrique ayant un indice de réfraction supérieur à celui de la silice pure, mais inférieur à celui de la couche guidante en nitrure par exemple. Dans ce cas, les différents composants pourront être réalisés par gravure de cette couche diélectrique.

**Revendications**

1. Capteur pour optique intégrée servant à mesurer la distance parcourue par un mobile et à déterminer le sens de déplacement de ce mobile (34), comportant :
   – une source de lumière (14) émettant un faisceau principal de lumière monochromatique (16),
   – des moyens de collimation (18) du faisceau principal,
   – des premiers moyens séparateurs (22, 64) du faisceau principal collimaté pour former un faisceau de mesure (24) et un faisceau de référence (26),
   – un premier miroir (32) solidaire du mobile (34) pour renvoyer le faisceau de mesure (24) sur les premiers moyens séparateurs,
   – des moyens déphaseurs (28) pour introduire un déphasage constant, différent de $\pi$, sur une partie du faisceau de référence (26) afin de former un premier et un second faisceaux de référence déphasés,
   – un second miroir (30) pour renvoyer les premier et second faisceaux de référence sur les premiers moyens séparateurs afin de faire interférer respectivement les premier et second faisceaux de référence avec le faisceau de mesure et former ainsi des premier et second signaux lumineux d'interférence (38, 40), ces signaux d'interférence étant représentatifs du déplacement du mobile et du sens de déplacement de ce mobile,
   – des seconds moyens séparateurs (36) pour séparer les premier et second signaux d'interférence,
   – des premier et second détecteurs (38, 40) pour détecter respectivement les premier et second signaux d'interférence, ce capteur, partiellement intégré sur un substrat monocristallin (2), comportant aussi un guide de lumière (2) d'indice effectif $n_e$ formé sur le substrat, dans lequel se propagent les différents faisceaux lumineux, les moyens de collimation (18), les premiers moyens séparateurs (22, 64) et les moyens déphaseurs (28) étant alors formés respectivement par une modification locale appropriée de l'indice effectif du guide de lumière et le premier miroir (32) et les seconds moyens séparateurs (36) étant formés respectivement par un flanc gravé du guide de lumière, s'étendant jusqu'au substrat.

2. Capteur selon la revendication 1, caractérisé en ce que le déphasage introduit entre les premier et second faisceaux de référence est égal à $\pi/2$.

3. Capteur selon la revendication 1 ou 2, caractérisé en ce que le guide de lumière (2) comprend successivement en partant du substrat (4), une couche continue d'un premier matériau (6), une couche continue d'un second matériau (8) et une couche (10) d'un troisième matériau comportant des motifs gravés (18, 19, 22, 28, 58) constituant les modifications locales de l'indice effectif du guide de lumière, le second matériau ayant un indice de réfraction supérieur à celui des premier et troisième matériaux.

4. Capteur selon la revendication 3, caractérisé en ce que les premier et troisième matériaux sont de la silice pure, le second matériau est du nitrure de silicium et le substrat est du silicium.

5. Capteur selon la revendication 3 ou 4, caractérisé en ce que les motifs (19, 58) gravés sont remplis d'un quatrième matériau (60, 62) ayant un indice de réfraction différent de celui du troisième matériau.

6. Capteur selon l'une quelconque des revendications 1 à 5, caractérisé en ce que les premiers moyens séparateurs sont formés d'un réseau de diffraction (64) fonctionnant à l'ordre 1 ou à un ordre plus élevé.

7. Capteur selon l'une quelconque des revendications 1 à 6, caractérisé en ce que le flanc gravé (68) formant le premier miroir ou les seconds moyens séparateurs est recouvert d'une couche métallique (70), et éventuellement d'une couche de protection (72).

8. Capteur selon l'une quelconque des revendications 1 à 7, caractérisé en ce qu'il comprend un microguide d'entrée (12) formé sur le substrat (4) et intercalé entre la source de lumière (14) et les moyens de collimation (18).

9. Capteur selon l'une quelconque des revendications 1 à 8, caractérisé en ce qu'il comprend, entre les premiers moyens séparateurs (22) et le second miroir (32), un élément optique (50) servant à limiter les effets de diffraction du faisceau de mesure sortant du guide de lumière.

10. Capteur selon l'une quelconque des revendications 3 à 9, caractérisé en ce que les motifs et/ou les flancs gravés sont obtenus au moyen d'une gravure ionique réactive.

## Ansprüche

1. Sensor für eine integrierte Optik, der dazu dient, den von einem Fahrzeug zurückgelegten Weg zu messen und die Richtung der Bewegung dieses Fahrzeugs (34) zu bestimmen, mit :
- einer Lichtquelle (14), die einen Hauptstrahl (16) eines monochromatischen Lichts aussendet,
- einer Bündelungsvorrichtung (18) für den Hauptstrahl,
- ersten Trennvorrichtungen (22, 64) für den gebündelten Hauptstrahl, um einen Meßstrahl (24) und einen Referenzstrahl (26) zu bilden,
- einem ersten Spiegel (32), der mit dem Fahrzeug (34) verbunden ist, um den Meßstrahl (24) auf die ersten Trennvorrichtungen zurückzuschicken,
- Dephasierungsvorrichtungen (28), um eine konstante, von $\pi$ verschiedene Phasenverschiebung für einen Teil des Referenzstrahls (26) einzuführen, um einen ersten und einen zweiten, phasenverschobenen Referenzstrahl zu bilden,
- einem zweiten Spiegel (30), um die ersten und zweiten Referenzstrahlen auf die ersten Trennvorrichtungen zurückzuschicken, um jeweils die ersten und zweiten Referenzstrahlen mit dem Meßstrahl interferieren zu lassen und so erste und zweite Interferenzleuchtsignale (38, 40) zu bilden, wobei diese Interferenzsignale die Entfernung und die Richtung der Entfernung des Fahrzeugs darstellen,
- zweiten Trennvorrichtungen (36), um die ersten und zweiten Interferenzsignale zu trennen,
- ersten und zweiten Detektoren (38, 40), um jeweils die ersten und zweiten Referenzsignale zu detektieren, wobei dieser Sensor, der teilweise auf einem einkristallinen Substrat (2) integriert ist, außerdem einen auf dem Substrat geformten Lichtleiter (2) mit einem effektiven Brechungsindex $n_e$ umfaßt, in dem sich die verschiedenen Lichtstrahlen fortbewegen, wobei die Bündelungsvorrichtungen (18), die ersten Trennvorrichtungen (22, 64) und die Dephasierungsvorrichtungen (28) jeweils durch eine geeignete, lokale Modifikation des effektiven Brechungsindex des Lichtleiters gebildet werden und der erste Spiegel (32) und die zweiten Trennvorrichtungen (36) jeweils durch eine geätzte Flanke des Lichtleiters, die sich bis auf das Substrat erstreckt, gebildet werden.

2. Sensor nach Anspruch 1, dadurch gekennzeichnet, daß die zwischen dem ersten und dem zweiten Referenzstrahl eingeführte Phasenverschiebung $\pi/2$ beträgt.

3. Sensor nach Anspruch 1 oder 2, dadurch gekennzeichnet, daß der Lichtleiter (2) der Reihe nach vom Substrat (4) ausgehend umfaßt : eine kontinuierliche Schicht aus einen ersten Material (6), eine kontinuierliche Schicht aus einem zweiten Material (8) und eine Schicht (10) aus einem dritten Material, die geätzte Strukturen (18, 19, 22, 28, 58) besitzt, die die lokalen Modifikationen des effektiven Brechungsindex des Lichtleiters bilden, wobei das zweite Material einen Brechungsindex besitzt, der größer ist als der des ersten und der der dritten Materials.

4. Sensor nach Anspruch 3, dadurch gekennzeichnet, daß die ersten und dritten Materialien reines Silizium sind, das zweite Material Siliziumnitrid ist und das Substrat aus Silizium besteht.

5. Sensor nach Anspruch 3 oder 4, dadurch gekennzeichnet, daß die geätzten Strukturen (19, 58) mit einem vierten Material (60, 62) gefüllt sind, daß einen von dem Brechungsindex des dritten Materials verschiedenen Brechungsindex besitzt.

6. Sensor nach einem der Ansprüche 1 bis 5, dadurch gekennzeichnet, daß die ersten Trennvorrichtungen aus einem Beugungsgitter (64) gebildet werden, das in der ersten Ordnung oder in einer höheren Ordnung arbeitet.

7. Sensor nach einem der Ansprüche 1 bis 6, dadurch gekennzeichnet, daß die geätzte Flanke (68), die den ersten Spiegel oder die zweiten Trennvorrichtungen bildet, mit einer metallischen Schicht (70) und eventuell einer Schutzschicht bedeckt ist.

8. Sensor nach einem der Ansprüche 1 bis 7, dadurch gekennzeichnet, daß er eine Eingangsmikroführung (12) aufweist, die auf dem Substrat (4) geformt ist und zwischen der Lichtquelle (14) und den Bündelungsvorrichtungen (18) angeordnet ist.

9. Sensor nach einem der Ansprüche 1 bis 8, dadurch gekennzeichnet, daß er zwischen den ersten Trennvorrichtungen (22) und dem zweiten Spiegel (32) ein optisches Element (50) aufweist, das dazu dient, die Beugungseffekte des Meßstrahls, der aus dem Lichtleiter austritt, zu begrenzen.

10. Sensor nach einem der Ansprüche 3 bis 9, dadurch gekennzeichnet, daß die Strukturen und-/oder geätzten Flanken durch ionenreaktives Ätzen erhalten werden.

## Claims

1. Transducer in integrated optics used for measuring the distance covered by a moving object and for determining the displacement direction of said moving object (34) having :
- a light source (14) emitting a main monochromatic light beam (16),
- means for collimating (18) the main beam,
- first means for splitting (22, 64) the main collimated beam (24) to form a measuring beam and a reference beam (26),
- a first mirror (32) integral with the moving object (34) for reflecting the measuring beam (24) on to the first splitting means,
- phase displacement means (28) for introducing a constant phase displacement, differing from $\pi$, over part of the reference beam (26), in order to form first and second phase displaced reference beams,
- a second mirror (30) for reflecting the first and second reference beams on to the first splitting means in order to bring about respective interference of the first and second reference beams with the measuring beam and thus form first and second interference light signals (38, 40), said signals representing the displacement of the moving object and its displacement direction,
- second splitting means (36) for splitting the first and second interference signals,
- first and second detectors (38, 40) for respectively detecting the first and second interference signals, said transducer, partly integrated on to a monocrystalline substrate (4), also having a light guide (2) of effective index $n_e$ formed on the substrate and in which the different light beams propagate, the collimating means (18), first splitting means (22, 64) and phase displacement means (28) then being respectively formed by an appropriate local modification of the effective index of the light guide and the first mirror (32) and splitting means (36) are respectively formed by an etched flank of the light guide extending up to the substrate.

2. Transducer according to claim 1, characterized in that the phase displacement introduced between the first and second reference beams is equal to $\pi/2$.

3. Transducer according to claims 1 or 2, characterized in that the light guide (2) successively comprises, starting from the substrate (4), a continuous layer of a first material (6), a continuous layer of a second material (8) and a layer (10) of a third material having etched patterns (18, 19, 22, 28, 58) constituting local modifications of the effective index of the light guide, the second material having a refractive index higher than that of the first and third materials.

4. Transducer according to claim 3, characterized in that the first and third materials are of pure silica, the second material of silicon nitride and the substrate is of silicon.

5. Transducer according to claims 3 or 4, characterized in that the etched patterns (19, 58) are filled by a fourth material (60, 62) having a refractive index differing from that of the third material.

6. Transducer according to any one of the claims 1 to 5, characterized in that the first splitting means are formed by a diffractive grating (64) operating at order 1 or a higher order.

7. Transducer according to any one of the claims 1 to 6, characterized in that the etched flank (68) forming the first mirror or the second splitting means is covered by a metallic coating (70) and optionally a protective coating (72).

8. Transducer according to any one of the claims 1 to 7, characterized in that it comprises an input microguide (12) formed on substrate (4) and inserted between the light source (14) and the collimating means (18).

9. Transducer according to any one of the claims 1 to 8, characterized in that it comprises, between the first splitting means (22) and the second mirror (32), an optical element (50) for limiting the diffraction effects of the measuring beam emanating from the light guide.

10. Transducer according to any one of the claims 3 to 9, characterized in that the patterns and/or etched flanks are obtained by means of reactive ionic etching.

FIG. 1

EP 0 286 528 B1

FIG. 2

FIG. 3

FIG. 4

FIG. 5

FIG. 6 a

FIG. 6 b